# EUROPEAN PATENT APPLICATION

(11) **EP 4 345 286 A1**
(43) Date of publication of application: **03.04.2024**
(21) Application number: 23166192.7
(22) Date of filing: 31.03.2023
(51) Int. Cl.: F03D 1/06

(54) **HUB OF WIND POWER GENERATOR AND WIND POWER GENERATOR**

(30) Priority: 30.09.2022 CN 202222615098 U; 30.09.2022 CN 202222614470 U; 30.09.2022 CN 202211216271; 30.09.2022 CN 202222614476 U
(71) Applicant: Sany Renewable Energy Co., Ltd., Beijing 102206 (CN)
(72) Inventor: LI, Zhen, Beijing (CN)
(74) Representative: Murgitroyd & Company

(57) **Abstract**

The present application provides a hub of a wind power generator and a wind power generator, the hub comprises: a hub main body (11), the hub main body (11) comprises a main shaft mounting end (15), a windward end (16) opposite to the main shaft mounting end (15), and a plurality of blade mounting parts (13) distributed along the circumferential direction of the hub main body (11), wherein the hub main body (11) is formed by joining at least two split parts. The technical solution provided by the application can effectively reduce the difficulty of manufacturing and assembling the hub.

## Description

### TECHNICAL FIELD

The present application relates to the technical field of wind power equipment, and in particular, to a hub of wind power generator and a wind-power generator.

### BACKGROUND

A hub of a wind power generator is an important part of the wind power generator. The hub is connected with blades and a main shaft of the wind power generator respectively. The blades drive the hub to rotate under the driving of wind energy, the hub drives the main shaft to rotate, and the main shaft drives the power generation equipment to convert kinetic energy into electrical energy.

In order to realize the installation of the hub, the main shaft, and the blades, the first end (big head end) of the hub is provided with a main shaft connection part, and a plurality of blade mounting parts are provided on the hub, the plurality of blade mounting parts are evenly distributed on the outer peripheral surface of the hub along the circumferential direction with the axis of the hub as the center, and the second end of the hub opposite to the first end is a windward end, constituting the small head end of the hub.

Due to the large volume of the hub, manufacturing and assembling of the hub in the prior art is relatively difficult, which has become an important technical problem to be solved by those skilled in the art.

### SUMMARY

The present application provides a hub of wind power generator and a wind power generator, which can reduce the difficulty of manufacturing and assembling of the hub.

According to one aspect of the present application, a hub of a wind power generator, the hub includes a hub main body, and the hub main body includes a main shaft mounting end, a windward end opposite to the main shaft mounting end, and a plurality of blade mounting parts distributed along the circumferential direction of the hub main body, wherein the hub main bod is formed by joining at least two split parts.

In one embodiment, the hub main body is divided into a first split part and a second split part by a dividing plane, the dividing plane coincides with an axis line of the hub main body, and the dividing plane penetrates through a boundary area of two adjacent blade mounting parts and an area opposite to the boundary area;

the main shaft mounting end of the first split part and the main shaft mounting end of the second split part are connected through a first end connecting member, the windward ends are connected through a second end connecting member, and the boundary areas of the blade mounting parts of the first split part and the second split part are connected through a first plate-shaped member, and the areas opposite to the boundary areas are connected through a second plate-shaped member.

The hub main body is divided into a first split part and a second split part by a dividing plane, the dividing plane coincides with the axis line of the hub. It should be noted that, here, the axis line of the hub refers to the axis line of the main shaft after the hub is connected with the main shaft of the wind power generator. The dividing plane penetrates through the boundary area of two adjacent blade mounting parts and the area opposite to the boundary area. Here, the dividing plane is a kind of virtual plane, rather than an entity plane. The main shaft mounting ends of the first split part and the second split part are connected through a first end connecting member, the windward ends are connected through a second end connecting member, the boundary areas of the blade mounting parts of the first split part and the second split part are connected through a first plate-shaped member, and the areas opposite to the boundary area are connected through a second plate-shaped member. In this way, the dividing plane of the hub main body only penetrates one blade mounting part, that is, only one blade mounting part is divided into two parts, the manufacturing difficulty of the first split part and the second split part can be effectively reduced, and only one blade mounting part is relatively high in processing and assembling precision, so that the manufacturing and assembling difficulty of the hub can be effectively reduced according to the technical scheme.

In one embodiment, each of the boundary areas of the blade mounting parts is provided with at least two first plate-shaped members.

In one embodiment, each of the first plate-shaped members is an arc-shaped structure, and matches with the boundary area of the blade mounting parts.

In one embodiment, a web plate is provided in the area of the blade mounting part, the dividing plane penetrates through the web plate opposite to the boundary area, the first split part and the second split part are respectively provided with a plurality of seventh connecting holes on the web plate, the second plate-shaped member is provided with an eighth connecting hole corresponding to the seventh connecting hole, and the second plate-shaped member connects the web plates of the first split part and the second split part together by a connecting member inserted into the seventh connecting hole and the eighth connecting hole.

In one embodiment, the hub main body is provided with a first dividing plane, a second dividing plane and a third dividing plane, the first dividing plane, the second dividing plane and the third dividing plane are distributed along the circumferential direction of the hub main body, and penetrate through the main shaft mounting end of the hub main body to the windward end, so that the first dividing plane, the second dividing plane and the third dividing plane divide the hub main body into a first split part, a second split part and a third split part arranged in the circumferential direction;

the main shaft mounting ends of the first split part, the second split part and the third split part are connected through a first connecting member, the windward ends are connected through a second end connecting member, and outer peripheral surfaces of at least two of the first split part, the second split part and the third split part are connected through a plate-shaped member.

The hub main body is divided into the first split part, the second split part and the third split part by the first dividing plane, the second dividing plane and the third dividing plane, each dividing plane penetrate through the hub main body from the main shaft mounting end to the windward end along a longitudinal direction (the axis direction of the hub). It should be noted that each dividing plane is a kind of virtual plane, rather than an entity plane. And, the first dividing plane, the second dividing plane and the third dividing plane are distributed along the circumferential direction of the hub main body, so that the hub main body is divided into the first split part, the second split part and the third split part arranged along the circumferential direction, that is, the first split part, the second split part and the third split part are arranged in the circumferential direction with the axis line of the hub main body as the center, forming the hub main body. The main shaft mounting ends of the first split part, the second split part and the third split part are connected through the first end connecting member, the windward ends are connected through the second end connecting member, and the outer peripheral surfaces of the first split part, the second split part and the third split part are connected through a plate-shaped member, for example, the plate-shaped member can be connected to the outer peripheral surfaces of the first split part and the second split part at the same time to realize the connection of the first split part and the second split part, and the other plate-shaped member are connected to the outer peripheral surfaces of the second split part and the third split part, and the outer peripheral surface of the third split part and the first split part, to realize mutual connection of the first split part, the second split part and the third split part to form a complete hub main body. With such an arrangement, there is no need to form a flange structure on each split part, the structure is simple, which effectively reduces manufacturing difficulty.

In one embodiment, a web plate is provided in the area of the blade mounting parts, the first dividing plane, the second dividing planes and the third dividing plane penetrate through the web plates of three blade mounting parts, and the plate-shaped members are connected to the web plates of the first split part, the second split part and the third split part.

In one embodiment, the first end connecting member is formed by sequentially joining at least two arc-shaped connecting members; or, the first end connecting member is a complete closed-loop structure.

In one embodiment, a cavity structure is provided inside the hub main body, butting surfaces of adjacent split parts are provided with corresponding butt flanges (17), and the butt flanges are arranged in the cavity structure, and the adjacent split parts are connected through the butt flanges.

The butting surfaces of adjacent split parts are provided with corresponding butt flanges, and the butt flanges are arranged inside the cavity structure of the hub main body. For example, when the hub main body is formed by joining two split parts, the butt flanges are arranged inside the cavities of the two split parts, and adjacent split parts are connected through the butt flanges. With this arrangement, there is no need to arrange connecting plates on the outer wall of the hub main body, but the butt flanges are only required to be arranged inside the cavity structure of the hub main body, and the butt flanges are planar butt joints, the structure is simple, and the manufacturing and assembly accuracy is easy to ensure. In addition, the butt flange is arranged inside the cavity structure of the hub main body, which will not affect the operation and maintenance work of the staff and the installation of related components.

In one embodiment, the butt flange includes a central part and a plurality of radially extending parts, a first end of each of the radially extending parts is connected to the central part, each of the radially extending parts extends radially outward from the central part, and a second end of each of the radially extending parts is connected to the inner side wall of the split part.

In one embodiment, the at least two split parts include a first split part and a second split part, the butting surface between the first split part and the second split part is perpendicular to an axial direction of the hub main body.

In one embodiment, the number of the split parts is three or more, and the butt flange is configured as a bent structure, so that each of the butt flanges is connected with at least two other butt flanges.

In one embodiment, the central part is provided with a through-hole structure for a worker to pass through; a blade mounting position of the hub main body is provided with a web plate, and the web plate is provided with a manhole for workers to pass through; an avoidance notch is provided at a position, corresponding to the manhole, of the butt flange.

In one embodiment, the hub main body is provided with a fourth dividing plane, the fourth dividing plane is perpendicular to the axis line of the hub main body, and the fourth dividing plane divides the hub main body into a first primary split part and a second primary split part which are independent of each other, the first primary split part and the second primary split part are detachably connected, the windward end is located on the first primary split part, and the main shaft mounting end is located on the second primary split part;

the first primary split part is provided with at least one fifth dividing plane, and the fifth dividing plane divides the first primary split part into at least two mutually independent secondary split parts along an axial direction of the hub, and any two adjacent secondary split parts are detachably connected.

the hub main body is provided with a fourth dividing plane, the fourth dividing plane is perpendicular to the axis line of the hub main body, and the fourth dividing plane divides the hub main body into a first primary split part and a second primary split part, which are independent with each other, and the first primary split part and the second primary split part are detachably connected, the windward end is located on the first primary split part, the main shaft mounting end is located on the second primary split part, and the dimension of the secondary primary split part along the axial direction of the hub is small, which is convenient for transportation and manufacture. In addition, the first primary split part is provided with at least one fifth dividing plane, the fifth dividing plane divides the first primary split part into at least two mutually independent secondary split parts along the axial direction of the hub, any two adjacent secondary split parts are detachably connected. It should be noted that, the fourth dividing plane and the fifth dividing plane mentioned above are both virtual planes rather than entity planes. The first primary split part is divided into at least two independent secondary split parts by the fifth dividing plane, the size of a single secondary split part is small, which is convenient for processing and transportation, and because the overall load borne by the first primary split part is smaller than that of the secondary primary split part, the first primary split part is divided into a plurality of independent secondary split parts and then assembled, the overall structure of the hub will not be affected since the load carried by the first primary split part is relatively small. In the hub provided in this application, the second primary split part and a plurality of secondary split parts can be manufactured and transported separately. After transported to the installation site, the second primary split part and a plurality of secondary split parts are assembled into an integral hub. This is convenient for the manufacture and transportation of the hub, and the main shaft mounting end is completely retained on the second primary split part, so the main shaft mounting end will not be deformed or damaged due to excessive load.

In one embodiment, each of the secondary split parts is detachably connected by a annular connecting member, one end, located at the windward end, of each of the secondary split parts is provided with a third connecting hole, the annular connecting member is provided with a fourth connecting hole that is in a one-to-one correspondence with the third connecting hole, and a connecting member is detachably inserted into the corresponding third connecting hole and the fourth connecting hole.

In one embodiment, the fifth dividing plane penetrates through a boundary area between two adjacent blade mounting parts.

According to another aspect of the present application, a wind power generator is also provided, including the above-mentioned hub of the wind power generator.

According to the technical solution provided by the application, the hub of the wind power generator includes a hub main body, and the hub main body includes a main shaft mounting end, a windward end opposite to the main shaft mounting end, and a plurality of blade mounting parts distributed along the circumferential direction of the hub main body. The main shaft mounting end is configured to connect with the main shaft of the wind power generator, so as to drive the power generation equipment through the hub. The hub main body is formed by joining at least two split parts, which can effectively reduce the difficulty of manufacturing and assembling the hub.

### BRIEF DESCRIPTION OF THE DRAWINGS

Fig. 1 is a structural schematic view of a hub of the wind-driven generator according to an embodiment of the present application where a main shaft mounting end of the hub is upward;
Fig. 2 is a structural schematic diagram of a hub according to an embodiment of the present application where a windward end of the hub is upward;
Fig. 3 is a schematic diagram of a main shaft mounting end of a hub according to an embodiment of the present application;
Fig. 4 is a structural schematic diagram of a windward end of a hub according to an embodiment of the present application;
Fig. 5 is a schematic diagram of the connection state between a hub and a main shaft according to an embodiment of the present application;
Fig. 6 is a schematic diagram of the overall structure of a hub of a wind power generator according to an embodiment of the present application;
Fig. 7 is a schematic structural diagram of a first split part according to an embodiment of the present application;
Fig. 8 is a schematic structural diagram of a second split part according to an embodiment of the present application;
Fig. 9 is a schematic diagram of a hub of a wind generator according to an embodiment of the present application where a windward end of the hub is upward;
Fig. 10 is a schematic diagram of a hub of the wind power generator according to an embodiment of the present application where a main shaft mounting end of the hub is upward;
Fig. 11 is a schematic diagram of a hub of a wind generator according to an embodiment of the present application where a windward end of the hub is upward;
Fig. 12 is a schematic diagram of a hub of a wind power generator according to an embodiment of the present application where a main shaft mounting end of the hub is upward.

Explanation of reference signs: 11-hub main body; 111-first split part; 112-second split part; 113-third split part; 12-dividing plane; 121-first dividing plane; 122-second dividing plane; 123-third dividing planes; 124-fourth dividing plane; 125-fifth dividing plane; 13-blade mounting part; 14-web plate; 141-manhole; 142-weight reduction hole; 15- main shaft mounting end; 16-windward end; 17-butt flange; 171-central part; 172-radially extending part; 173-through-hole structure; 174-avoidance notch; 20-main shaft; 21-first end connecting member; 22-second end connecting member; 23-first plate-shaped member; 24-second plate-shaped member; 25-plate-shaped member; 26-first connecting plate; 27-second connecting plate; 28-annular connecting member.

### DETAILED DESCRIPTIONS OF THE EMBODIMENTS

In order to make the purpose, technical solutions and advantages of this application clearer, the technical solutions in this application will be clearly and completely described below in conjunction with the accompanying drawings in this application. Obviously, the described embodiments are part of the embodiments of this application, but not all examples. Based on the embodiments in this application, all other embodiments obtained by persons of ordinary skill in the art without creative efforts fall within the protection scope of this application.

The embodiment of the present application provides a hub of a wind power generator, includes: a hub main body 11, and the hub main body 11 includes a main shaft mounting end, a windward end opposite to the main shaft mounting end, and a plurality of blade mounting parts distributed along the circumferential direction of the hub main body, wherein the hub main body is formed by joining at least two split parts.

The hub used for wind power generators has a large volume. In order to facilitate the manufacture and transportation of the hub, the hub is divided into a plurality of split parts, a plurality of split parts are manufactured and transported separately, after the split parts are transported to the mounting site, the split parts are assembled and connected together to form the hub main body.

In some embodiments, the hub is divided into two independent split parts by a dividing plane, wherein the dividing plane is perpendicular to the axis line of the hub, where the axis line of the hub refers to the axis line of the main shaft after the hub is connected with the main shaft of the wind power generator. Since the hub is divided into two parts by the dividing plane perpendicular to the axial direction, the three blade mounting parts distributed along the circumferential direction are also divided into three pairs of blade mounting parts. When assembling, each pair of blade mounting parts should have high concentricity requirements to ensure the normal installation of the blades. This requires high manufacturing precision and assembly precision of each split part, and the manufacturing and assembly of the split parts are relatively difficult.

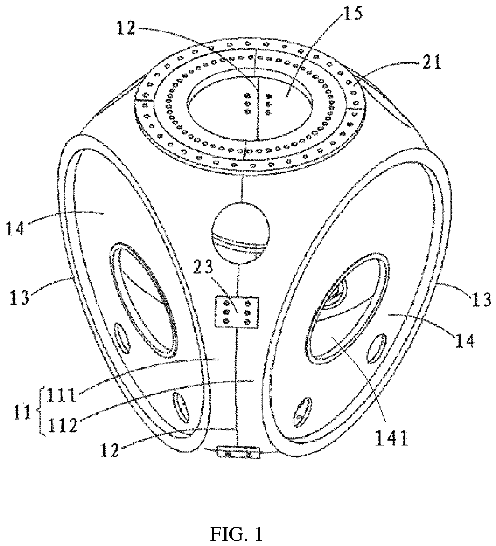

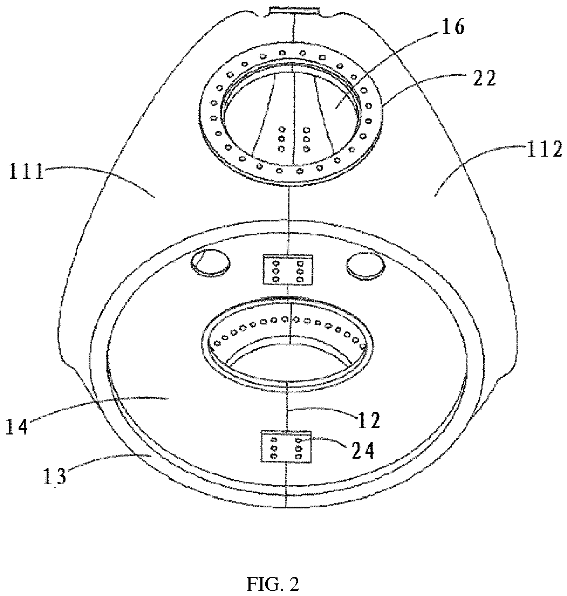

Based on the discovery of the above technical problems, please refer to the embodiment shown in Fig. 1 and Fig. 2, which provides a hub of a wind power generator, comprising a hub main body 11, the hub main body 11 is used to connect with the blades and the main shaft of the wind power generator.

The hub main body 11 has a main shaft mounting end 15, a windward end 16 and a blade mounting part 13. Wherein the hub main body 11 has a hollow structure inside, the main shaft mounting end 15 is provided with a main shaft mounting hole for matching with the main shaft, and the windward end 16 is arranged opposite to the main shaft mounting end 15, that is, the windward end 16 and the main shaft mounting end 15 are respectively located at two opposite ends of the hub. The windward end 16 is provided with a through-hole structure.

The blade mounting part 13 is configured to install a blade. Generally, the wind generator is provided with three blades. Accordingly, three blade mounting parts 13 are provided, which are uniformly distributed along the circumferential direction with the axis of the hub as the center. The blade mounting part 13 is provided with an annular flange, and the pitch bearing of the blade is installed on the annular flange of the hub. The inside of the annular flange is provided with a web plate 14, which can play a role in strengthening the overall structural strength of the hub, and, in order to facilitate the operator to enter the interior of the hub, each web plate 14 is provided with a manhole141 for the operator to pass through, the manhole 141 can be disposed at the center of the web plate 14.

In one embodiment, as shown in FIGS. 1-2, the hub main body 11 is divided into a first split part 111 and a second split part 112 by a dividing plane 12, and the dividing plane 12 coincides with the axis line of the hub. It should be noted that, here, the axis line of the hub refers to the axis line of the main shaft after the hub is connected with the main shaft of the wind power generator. The dividing plane 12 penetrates through the boundary area between two adjacent blade mounting parts 13 and the web plate 14 opposite to the boundary area. The dividing plane 12 divides the hub main body 11 into a first split part 111 and a second split part 112 along the longitudinal direction (the axial direction of the hub), and the first split part 111 and the second split part 112 may be symmetrical structures.

As shown in FIG. 1, the main shaft mounting ends 15 of the first split part 111 and the second split part 112 are connected through a first end connecting member 21, the first end connecting member 21 is connected to the main shaft mounting ends 15 of the first split part 111 and the main shaft mounting end 15 of the second split part 112 simultaneously, thereby realizing the connection between the main shaft mounting end 15 of the first split part 111 and the main shaft mounting end 15 of the second split part 112. As shown in FIG. 2, the windward ends 16 are connected through a second end connecting member 22, the second end connecting member 22 is connected to the windward ends 16 of the first split part 111 and the second split part 112 at the same time, thereby realizing the connection between the windward end 16 of the first split part 111 and the windward end 16 of the second split part 112.

The boundary area of the blade mounting part 13 of the first split part 111 and the second split part 112 are connected through a first plate-shaped member 23, the first plate-shaped member 23 is connected to the boundary area of the blade mounting part 13 of the first split part 111 and the boundary area of the blade mounting part 13 of the second split part 112 simultaneously, thereby realizing the connection of the boundary area of the blade mounting part 13 of the first split part 111 and the second split part 112.

The web plate 14 of the first split part 111 and the second split part 112 are connected through a second plate-shaped member 24, the second plate-shaped member 24 is connected with the web plate 14 of the first split part 111 and the second split part 111 at the same time. thereby realizing the connection of the positions of the web plates 14 of the first split part 111 and the positions of the web plates 14 of the second split part 112.

In this way, the dividing plane 12 of the hub main body 11 only penetrates through one blade mounting part 13, that is, only one blade mounting part 13 is divided into two parts. Compared with the prior art, the three blade mounting parts 13 are all divided into two parts by the dividing plane 12, the technical solution provided by this embodiment can effectively reduce the manufacturing difficulty of the first split part 111 and the second split part 112. Moreover, this embodiment only has high requirements on the machining and assembly accuracy of one blade mounting part 13. Obviously, the technical solution provided by this embodiment can effectively reduce the difficulty of manufacturing and assembling the hub.

In a further embodiment, the main shaft mounting ends 15 of the first split part 111 and the second split part 112 are provided with a plurality of first connecting holes, and the first end connecting member 21 is provided with a second connecting hole corresponding to first connecting hole one by one, the first end connecting member 21 connects the main shaft mounting ends 15 of the first split part 111 and the second split part 112 through a connector inserted in the first connecting hole and the second connecting hole. That is, the main shaft mounting end 15 of the first split part 111 is provided with a plurality of first connecting holes, and the main shaft mounting end 15 of the second split part 112 is also provided with a plurality of first connecting holes, the first end connecting member 21 is provided with a plurality of second connecting holes, which correspond to the first connecting holes on the first split part 111 and the second split part 112 one to one, connecting members such as bolts and pins are inserted into the first connecting holes and the second connecting holes to connect the first end connecting member 21 to the main shaft mounting end 15 of the first split part 111 and the second split part 112 simultaneously, thereby realizing the connection between the main shaft mounting end 15 of the first split part 111 and the main shaft mounting end 15 of the second split part 112.

Since the main shaft mounting end 15 of the hub main body 11 has a relatively large size, in order to reduce the processing difficulty of the first end connecting member 21, the first end connecting member 21 can be formed by joining a plurality of arc-shaped connecting members, for example, the first end connecting member 21 can be an entire annular connecting member formed by two sections of semi-annular connecting members. Certainly, in other embodiments, the first end connecting member 21 may also be a complete closed-loop structure.

In a further embodiment, the windward end 16 of the first split part 111 is provided with a plurality of third connecting holes, and the windward end 16 of the second split part 112 is also provided with a plurality of third connecting holes, the second end connecting member 22 is provided with a fourth connecting hole corresponding to the third connecting hole one-to-one, and the second end connecting member 22 connects the windward ends 16 of the first split part 111 and the second split part 112 together through the bolts, pins and other connecting members inserted into the third connecting hole and the fourth connecting hole.

In this way, the second end connecting member 22 is connected to the windward end 16 of the first split part 111 and the second split part 112 at the same time, thereby realizing the connection between the windward end 16 of the first split part 111 and the windward end 16 of the second split part 112.

In a further embodiment, the first split part 111 and the second split part 112 are respectively provided with a plurality of fifth connecting holes in the boundary area of the blade mounting part 13, and the first plate-shaped member 23 is provided with a sixth connecting hole corresponding to the fifth connecting hole one-to-one, the first plate-shaped member 23 connects the boundary area of the blade mounting part 13 of the first split part 111 and the second split part 112 through connecting members such as bolts and pins inserted in the fifth connecting hole and the sixth connecting hole. In order to improve connection reliability, at least two first plate-shaped members 23 are provided at each boundary area of blade mounting part 13. For example, two first plate-shaped members 23 may be provided at the boundary area of the blade mounting part 13 of the first split part 111 and the second split part 112, both of which are connected to the first split part 111 and the second split part 112 through connecting members such as bolts and pins, which ensures the connection reliability between the first split part 111 and the second split part 112.

Since the outer wall of the hub is an arc-shaped surface, in order to ensure the reliability of the connection between the first plate-shaped member 23 and the hub, the first plate-shaped member 23 is also configured as an arc-shaped structure, and matches with the boundary area of the blade mounting part 13 of the hub, that is, the first plate-shaped member 23 is completely attached to the arc-shaped surface of the hub main body 11, so that the first plate-shaped member 23 can be reliably connected to the hub main body 11.

In a further embodiment, the first split part 111 and the second split part 112 are respectively provided with a plurality of seventh connecting holes on the web plate 14, and the second plate-shaped member 24 is provided with a seventh connecting holes corresponding to the eighth connecting hole one to one., the second plate-shaped member 24 connects the web plate 14 of the first split part 111 and the second split part 112 together through connecting members such as bolts and pins inserted in the seventh connecting hole and the eighth connecting hole. At least two second plate-shaped member 24 are connected to each web plate 14, and the at least two second plate-shaped member 24 are distributed on both sides of the manhole of the web plate 14. With such an arrangement, the web plates 14 of the first split part 111 and the second split part 112 can be reliably connected together by the second plate-shaped member 24.

In some embodiments, a flange structure is provided at the butt joint position of two adjacent split parts, the flange structure and the split parts are cast integral structures, the flange structure is disposed on the outer wall of the split part, and extending a certain distance to the outside of the split part. When two adjacent split parts are butted, the flange structures of the two adjacent split parts are aligned, and then the flange structures are connected together by a plurality of bolts. However, this connection structure needs to cast a flange structure on the split parts at the same time, the structure is complicated, and the position accuracy of the flange structure is required to be high, which makes the manufacture of the hub more difficult.

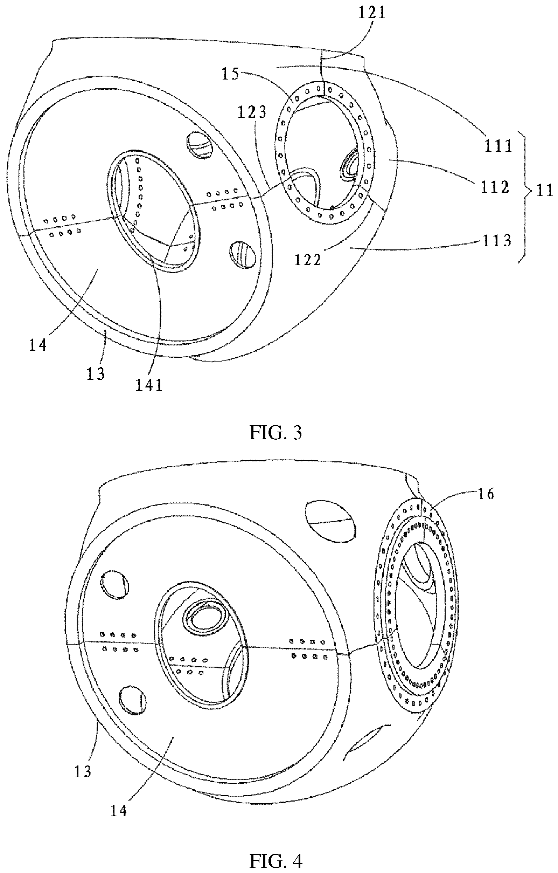

Based on the discovery of the above technical problems, in another embodiment, please refer to Fig. 3-Fig. 5, this embodiment provides a hub of a wind power generator, which includes a hub main body 11, the hub main body 11 is used to connect to the blades and the main shaft 20 of the wind power generator.

The hub main body 11 has a main shaft mounting end 15, a windward end 16 and a blade mounting part 13, wherein the hub main body 11 has a hollow structure inside, and the main shaft mounting end 15 is provided with a main shaft mounting hole for matching with the main shaft 20. When the main shaft mounting end 15 is connected to the main shaft 20, the axis line of the hub main body 11 coincides with the axis line of the main shaft 20. The windward end 16 of the hub main body 11 is opposite to the main shaft mounting end 15, that is, the windward end 16 and the main shaft mounting end 15 are respectively located at opposite ends of the hub, and the windward end 16 is provided with a through hole structure.

The blade mounting part 13 is configured to install the blade. Generally, the wind generator is provided with three blades. Accordingly, three blade mounting parts 13 of the hub main body are provided, which are uniformly distributed along the circumferential direction with the axis of the hub as the center. The blade mounting part 13 can be provided with an annular flange, the pitch bearing of the blade is installed on the annular flange of the hub. The inside of the annular flange may be provided with a web plate 14, which can play a role in strengthening the overall structural strength of the hub, and, in order to facilitate the operator to enter the interior of the hub, each web plate 14 is provided with a manhole 141 for the operator to pass through, the manhole 141 can be disposed at the center of the web plate 14.

In this embodiment, the hub main body 11 is divided into a first split part 111, a second split part 112 and a third split part 113 by the first dividing plane 121, the second dividing plane 122 and the third dividing plane 123, Each dividing plane penetrates through the main shaft mounting end 15 to the windward end 16 of the hub main body 11 along the longitudinal direction (the axis line direction of the hub main body 11).

And, the first dividing plane 121, the second dividing plane 122 and the third dividing plane 123 are distributed along the circumferential direction of the hub main body 11, so that the hub main body 11 is divided into the first split part 111, the second split part 112 and the third split part arranged along the circumferential direction, that is, the first split part 111, the second split part 112 and the third split part 113 are arranged in the circumferential direction around the axis line of the hub main body 11, forming the hub main body 11.

In this embodiment, the main shaft mounting ends 15 of the first split part 111, the second split part 112 and the third split part 113 are connected through the first end connecting member 21, the windward ends 16 are connected through the second end connecting member. 22, and the outer peripheral surfaces of the first split part 111, the second split part 112, and the third split part 113 are connected through plate-shaped members 25, specifically, the plate-shaped members 25 may include a first plate-shaped member, the second plate-shaped member and the third plate-shaped member, wherein the first plate-shaped member is connected to the outer peripheral surface of the first split part 111 and the second split part 112 at the same time, to realize the connection between the first split part 111 and the second split part 112. The second plate-shaped member is connected to the outer peripheral surfaces of the second split part 112 and the third split part 113 at the same time, so as to realize the connection between the second split part 112 and the third split part 113. The third plate-shaped member is connected to the outer peripheral surfaces of the third split part 113 and the first split part 111 at the same time, so as to realize the connection between the first split part 111 and the third split part 113. In this way, the first split part 111, the second split parts 112 and the third split part 113 of the hub main body 11 are connected to each other to form a whole. Apparently, the technical solution provided by this embodiment does not need to form a flange structure on each split part, and its structure is simple, which effectively reduces the manufacturing difficulty of the hub main body.

In a further embodiment, the first dividing plane 121, the second dividing plane 122 and the third dividing plane 123 respectively penetrate through the web plates 14 of the three blade mounting parts 13, specifically, the web plates 14 of the three blade mounting parts 13 may be separated along the line of symmetry of the web plates 14, and the plate-shaped members 25 are respectively connected to the web plates 14 of the first split part 111, the second split part 112 and the third split part 113.

It should be noted that the web plate 14 is a flat plate structure, and the plate-shaped member 25 is connected to the web plate 14, and the plate-shaped member 25 can also be configured as a flat plate structure, which has a simple structure and is easy to install.

In a further embodiment, the hub main body 11 is divided into a first split part 111, a second split part 112 and a third split part 113 by the first dividing plane 121, the second dividing plane 122 and the third dividing plane 123, each dividing plane coincides with the axis line of the hub main body 11. It should be noted that, here, the axis line of the hub means that after the hub is connected to the main shaft 20 of the wind power generator, the axis line of the main shaft 20 is also the axis line of the hub. The first split part 111, the second split part 112 and the third split part 113 can be mutually symmetrical structures. For example, the first split part 111 and the second split part 112 are symmetrical to each other with the dividing plane between them as the plane of symmetry. Similarly, the second split part 112 and the third split part 113 are symmetrical to each other with the dividing plane between the two as the plane of symmetry, and the third split part 113 and the first split part 111 are symmetrical to each other with the dividing plane between them as the plane of symmetry.

The main shaft mounting ends 15 of the first split part 111, the second split part 112 and the third split part 113 are connected through the first end connecting member 21, the first end connecting member 21 is connected to the main shaft mounting end 15 of the first split part 111, the second split part 112 and the third split part 113 at the same time, thereby realizing the connection of the main shaft mounting end 15 of the first split part 111, the main shaft mounting end 15 of the second split part 112 and the main shaft mounting end 15 of the third split part 113.

In a further embodiment, the main shaft mounting ends 15 of the first split part 111, the second split part 112 and the third split part 113 are all provided with a plurality of first connecting holes, and the first end connecting member 21 is provided with a second connecting hole corresponding to the first connecting holes one-to-one, the first end connecting member 21 connects the main shaft mounting end 15 of the first split part 111, the second split part 112 and the third split part 113 together through the bolts, pins and other connecting members inserted into the first connecting hole and the second connecting hole.

Since the main shaft mounting end 15 of the hub main body 11 has a relatively large size, in order to reduce the processing difficulty of the first end connecting member 21, the first end connecting member 21 can be formed by joining a plurality of arc-shaped connecting members, for example, the first end connecting member 21 can be an entire annular connecting member formed by two sections of semi-annular connecting members. Certainly, in other embodiments, the first end connecting member 21 may also be a complete closed-loop structure.

The windward ends 16 of the first split part 111, the second split part 112 and the third split part 113 are connected through the second end connecting member 22, and the second ring is connected to the windward ends 16 of the first split part 111, the second split part 111 and the third split part 113 at the same time, thereby realizing the connection of the windward end 16 of the first split part 111, the windward end 16 of the second split part 112 and the windward end 16 of the third split part 113.

In a further embodiment, the windward end 16 of the first split part 111, the windward end 16 of the second split part 112, and the windward end 16 of the third split part 113 are all provided with a plurality of third connecting holes. The second end connecting member 22 is provided with a fourth connecting hole corresponding to the third connecting hole one to one, and the second end connecting member 22 connects the windward end 16 of the first split part 111, the windward end 16 of the second split part 112 and the windward end 16 of the third split part 113 together through the bolts, pins and other connecting members inserted into the third connecting hole and the fourth connecting hole.

In this way, the second end connecting member 22 is simultaneously connected to the windward ends 16 of the first split part 111, the second split part 112 and the third split part 113, thereby realizing the connection of the windward ends 16 of the third split parts.

In order to realize the interconnection of the web plates 14 of the first split part 111, the second split part 112, and the third split part 113, in this embodiment, the plate-shaped member 25 includes a first plate-shaped member, a second plate-shaped member and the third plate-shaped member, wherein the first plate-shaped member is connected with the web plate 14 of the first split part 111 and the second split part 112 at the same time, to realize the connection of the web plate 14 of the first split part 111 and the second split part 112. Specifically, the web plates 14 of the first split part 111 and the second split part 112 are provided with a plurality of fifth connecting holes, and the first plate-shaped member is provided with a sixth connecting hole, the connection of the web plate 14 of the first split part 111 and the second split part 112 can be realized through the bolts, pins and other connecting members inserted into the fifth connecting hole and the sixth connecting hole. According to the same connection method, the second plate-shaped member is connected with the web plate 14 of the second split part 112 and the third split part 113 at the same time, so as to realize connection of the web plate 14 of the second split part 112 and the third split part 113. The third plate-shaped member is connected with the web plate 14 of the third split part 113 and the first split part 111 at the same time, so as to realize the connection of the web plate 14 of the first split part 111 and the third split part 113.

In some embodiments, a plurality of connecting holes are provided at positions adjacent to each split part, and a connecting plate is connected to each connecting hole, and then the connecting plate connects the split parts together. However, the connecting plate needs to be consistent with the shape of the outer wall of the hub, and the outer wall of the hub is usually configured as a curved surface, which increases the processing difficulty of the connecting plate and makes it difficult to guarantee the connection accuracy.

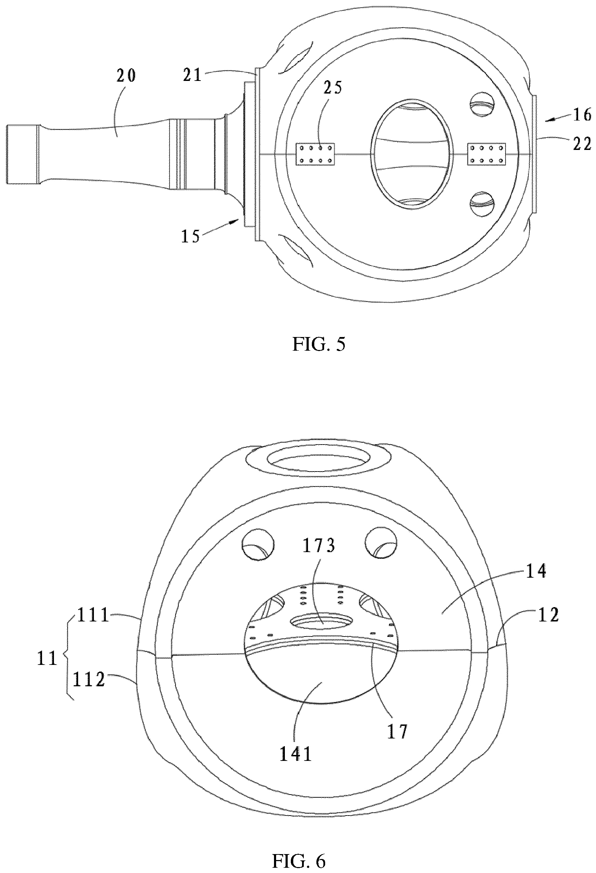

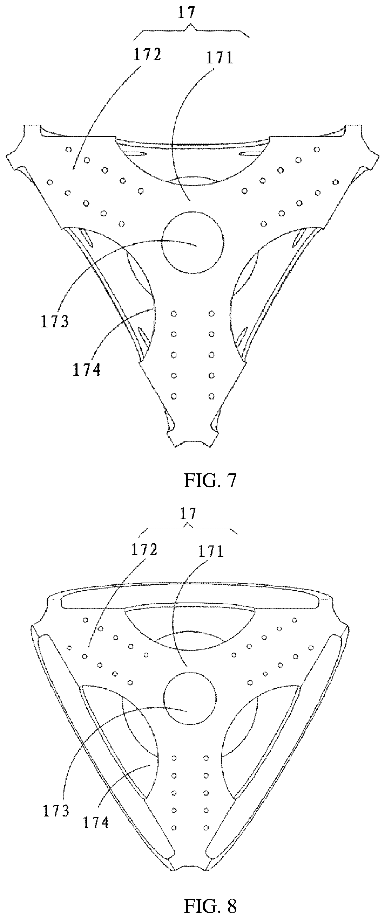

Based on the discovery of the above technical problems, in yet another embodiment, a hub of a wind power generator is provided, please refer to FIGS. 6-8, which includes a hub main body 11 formed by joining at least two split parts.

The hub main body 11 has a main shaft mounting end, a windward end and a blade mounting part. wherein the hub main body 11 has a hollow structure inside, the main shaft mounting end is provided with a main shaft mounting hole for matching with the main shaft, and the windward end is opposite to the main shaft mounting end, that is, the windward end and the main shaft mounting end are located at opposite ends of the hub respectively. The blade mounting part is configured to install the blade. Generally, the wind generator is provided with three blades. Accordingly, three blade mounting parts are provided, which are uniformly distributed along the circumferential direction with the axis of the hub as the center. The blade mounting part can be provided with an annular flange, and the pitch bearing of the blade is installed on the annular flange of the hub. The inside of the annular flange is provided with a web plate 14, which can play a role in strengthening the overall structural strength of the hub, and, in order to facilitate the operator to enter the interior of the hub, each web plate 14 is provided with a manhole for the operator to pass through, the manhole can be disposed at the center of the web plate 14.

In this embodiment, the butting surfaces of adjacent split parts are provided with corresponding butt flanges 17, and the butt flanges 17 are arranged inside the cavity structure of the hub main body 11, for example, when the hub main body 11 is formed by joining two split parts, the butt flanges 17 are arranged inside the cavities of the two split parts, and adjacent split parts are connected through the butt flanges. Specifically, the butt flanges 17 can be distributed with a plurality of connecting holes, the butt flanges can connected through bolts, pins and other connecting members inserted in the connecting holes, or the butt flanges 17 can also be connected by a buckle. Of course, in other embodiments, the hub main body 11 can also be formed by joining three or four split parts, and when two adjacent split parts are joined, they can be connected by the above-mentioned butt flange 17.

In this way, there is no need to arrange a connecting plate on the outer wall of the hub main body 11, only the butt flange 17 needs to be arranged inside the cavity structure of the hub main body 11, and the butt flange 17 is in plane butt joint, the structure is simple, and the manufacturing and assembling precision is easy to guarantee. In addition, in the technical solution provided by this embodiment, the butt flange 17 is arranged inside the cavity structure of the hub main body, which will not affect the operation and maintenance work of the staff and the installation of related components.

In a further embodiment, the butt flange 17 is configured as a flat plate structure, and the butt flange 17 is connected to the inner sidewall of the split part at a plurality of positions. Specifically, the butt flange 17 is configured as a flat plate, on which a plurality of connecting holes are provided, and the plurality of connecting holes may be distributed in a matrix or in a ring array, the butt butting surfaces of two adjacent split parts are provided with corresponding butt flanges 17, and the connecting holes on the two butt flanges 17 correspond one to one, when bolts are inserted into the connecting holes of the two butt flanges 17 at the same time, the connection between the split parts can be realized through the bolts and the butt flange 17.

Since the butt flange 17 is configured as a flat plate structure, its structure is simple, and its manufacturing and connection precision is high. Moreover, the assembled hub main body 11 has no connecting structure on its outer wall, which will not affect the maintenance of the operators or the installation of other external devices.

Certainly, in other embodiments, the number of the above-mentioned split parts can be three or more. In this embodiment, the butt flange 17 is configured as a bent structure, so that each butt flange 17 has a plurality of butt planes, and each butt flange 17 can be connected with at least two other butt flanges 17, thereby realizing the interconnection of three or more split parts.

In a further embodiment, the butt flange 17 and the split part are of cast integral structure or welded integral structure. Each of the above split part can be formed by casting, and the butt flange 17 can be cast together with the split part, or the split part and the butt flange 17 can also be manufactured separately, and then the two are connected together by welding.

In addition, it should be understood that the volume and weight of the hub main body 11 are relatively large. In order to reduce the weight of the hub main body 11, the hub main body 11 is usually provided with a cavity structure. However, it is difficult to guarantee the structural strength of the hub main body 11 with a cavity structure.

In view of this, in a further embodiment, the butt flange 17 includes a central part 171 and a plurality of radially extending parts 172, the first end of each radially extending part 172 is connected to the central part 171, and each radially extending part 172 extends radially outward with the central part 171 as the center, and the second end of each radially extending part 172 is connected with the inner wall of the split part. The central part 171 and the plurality of radially extending parts 172 of the butt flange 17 form an integral structure, and the plurality of radially extending parts 172 are supported on the inner side wall of the hub main body 11, and the plurality of radially extending parts 172 connected together through the central part 171.

In this way, the butt flange 17 can not only connect the adjacent split parts together, but also support inside the hub main body 11 to avoid deformation of the hub main body 11.

It should be noted that, generally, three blade installation positions are provided on the outer wall of the hub main body 11, and the three blade installation positions are evenly distributed on the outer wall of the hub along the circumferential direction with the axis line of the hub as the center. The blade installation position is provided with an annular flange, and the pitch bearing of the blade is installed on the annular flange of the hub.

In this embodiment, there are three radially extending parts 172, and they are respectively connected to regions between two adjacent blade mounting positions. The second end of the radially extending part 172 is connected between two adjacent blade mounting positions, that is, between two adjacent annular flanges. In this way, the butt flange 17 can support and reinforce the weak structural strength of the hub main body 11, further avoiding the deformation of the hub main body 11.

In some embodiments, the split parts includes a first split part 111 and a second split part 112, and the butting surface between the first split part 111 and the second split part 112 is perpendicular to the axial direction of the hub main body 11. That is, the hub main body 11 is divided into a first split part 111 and a second split part 112 by the dividing plane 12 perpendicular to the hub axis line. The first split part 111 and the second split part 112 are provided with the above-mentioned butt flange 17 on the corresponding surfaces, and the first split part 111 and the second split part 112 are reliably connected together through the butt flange 17.

In order to make it easier for workers to install and maintain the hub, in a further embodiment, the central part 171 of the butt flange 17 is provided with a through-hole structure 173 for workers to pass through, and the blade installation position of the hub main body 11 is provided with a web plate 14, the web plate 14 is provided with a manhole 141 for workers to pass through. The manhole 141 provided on the web plate 14 can allow the operator to enter the inside of the hub main body 11, and the through-hole structure 173 provided on the central part 171 of the butt flange 17 can allow the operator to enter different areas inside the hub main body 11, so that the operator can install and maintain hubs.

The butt flange 17 is arranged inside the cavity structure of the hub main body 11. In order to prevent the butt flange 17 from hindering the operator from entering the cavity structure of the hub main body 11, in a further embodiment, an avoidance notch 174 is provided at a position, corresponding to the manhole 141, of the butt flange 17.

After the operator enters the interior of the hub through the manhole 141 of the web plate 14, the avoidance notch 174 provided on the butt flange 17 can avoid a certain space for the operator to pass through.

The following content will give a comprehensive description of the hub of the wind power generator with reference to FIGS. 6-8.

In the hub provided in this embodiment, the hub main body 11 is divided into a first split part 111 and a second split part 112 by a dividing plane 12 perpendicular to the axis line of the hub, and the corresponding surfaces of the first split part 111 and the second split part 112 are both provided with butt flange 17, the butt flanges 17 are planar structures, and the butt flanges 17 are arranged inside the cavity structure of the hub main body 11, and each butt flange 17 is provided with a plurality of connecting holes.

The butt flange 17 and the split part are cast integral structures, the butt flange 17 includes a central part 171 and three radially extending parts 172, the first end of each radially extending part 172 is connected to the central part 171, and each radially extending part 172 extends radially outward around the central part 171, the second end of each radially extending part 172 is connected to the inner side wall of the split part, and the connection position is located at the area between two adjacent blade mounting positions. Moreover, an avoidance notch 174 is provided on the butt flange 17, and the avoidance notch 174 corresponds to the manhole 141 on the web plate 14 of the hub main body 11.

In this way, the first split part 111 and the second split part 112 are provided with butt flanges 17 on the corresponding surfaces, and the first split part 111 and the second split part can be joined by bolts connected to the butt flange 17. The structure is simple and connection precision is relatively high. Moreover, the connecting holes on the butt flange 17 can be distributed on each radially extending part 172, and there are many connecting points, and the distribution is reasonable, so that the connection between the first split part 111 and the second split part 112 has good reliability and stability. At the same time, the butt flange 17 can support the hub, so that the hub has a higher structural strength, and the butt flange 17 is arranged inside the hub main body 11, which does not affect the construction of workers or the installation of other devices.

In order to facilitate the manufacture and transportation of the hub, in some embodiments, the hub is divided into three identical parts, and the dividing plane is consistent with the axial direction of the hub, and each split part has a complete blade mounting part. When manufacturing and transporting, the three sub-parts are manufactured and transported respectively.

In this way, the main shaft mounting end of the hub is also formed by joining three split parts, and its structural strength is greatly affected. The main shaft mounting end bears a large load and is prone to deformation or damage. Moreover, the size of each split part along the axial direction of the hub does not change, and is equal to the axial length of the hub, so there are still problems of transportation and manufacturing inconvenience.

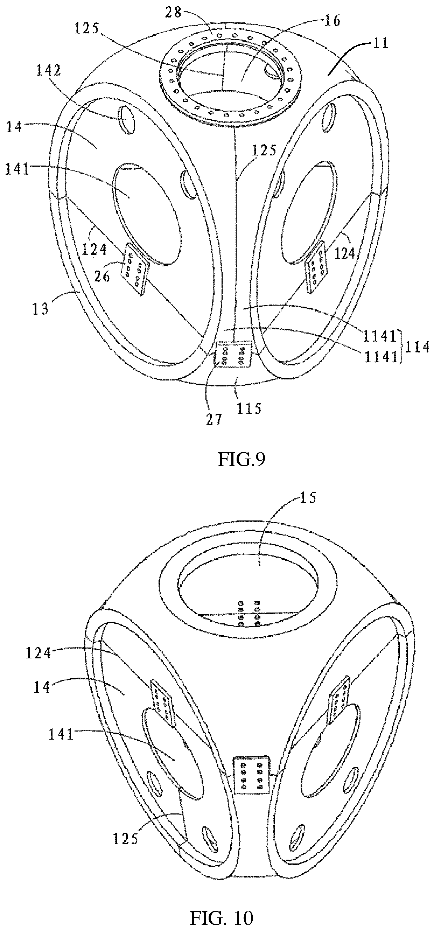

Based on the discovery of the above technical problems, another embodiment of the present application provides a hub of wind power generator; please refer to Figures 9-12, the hub includes a hub main body 11, the hub main body 11 has a main shaft mounting end 15, a windward end 16 and blade mounting part 13.

wherein the hub main body 11 has a hollow structure, the main shaft mounting end 15 is provided with a main shaft mounting hole for matching with the main shaft, and the windward end 16 is opposite to the main shaft mounting end 15, that is, the windward end 16 and the main shaft mounting end 15 are respectively located on the opposite ends of the hub.

The blade mounting part 13 is configured to install the blade. Generally, the wind generator is provided with three blades. Accordingly, three blade mounting parts 13 of the hub main body are provided, which are uniformly distributed along the circumferential direction with the axis of the hub as the center. The blade mounting part 13 can be provided with an annular flange, the pitch bearing of the blade is installed on the annular flange of the hub. The inside of the annular flange may be provided with a web plate 14, which can play a role in strengthening the overall structural strength of the hub, and, in order to facilitate the operator to enter the interior of the hub, each web plate 14 is provided with a manhole 141 for the operator to pass through, the manhole 141 can be disposed at the center of the web plate 14.

In order to facilitate manufacturing and transportation without affecting the overall strength of the hub, the hub provided in this embodiment is provided with a fourth dividing plane 124, the fourth dividing plane 124 is perpendicular to the axis line of the hub, and is located between each manhole 141 and the main shaft ends 15, that is, the fourth dividing plane 124 is relatively close to the main shaft mounting end 15 and relatively far away from the windward end 16. The fourth dividing plane 124 divides the hub main body 11 into a first primary split parts 114 and a second primary split part 115 that are independent with each other, the first primary split part 114 and the second primary split part 115 are detachably connected, the manhole 141 and the windward end 16 are located on the first primary split part 114, the main shaft mounting end 15 is located on the second primary split part 115, and the size of the second primary split part 115 along the axial direction of the hub is relatively small, which is convenient for transportation and manufacture.

In addition, the first primary split part 114 is provided with at least one fifth dividing plane 125, and the fifth dividing plane 125 divides the first primary split part 114 into at least two mutually independent two secondary split parts 1141 along the axial direction of the hub, any two adjacent secondary split parts 1141 are detachably connected. The first primary split part 114 is divided into at least two secondary split parts 1141 independent with each other by the fifth dividing plane 125. The size of the single secondary split part 1141 is relatively small, which is convenient for processing and transportation, and due to the overall load borne by the primary split part 114 is relatively small relative to the second primary split part 115, and the first primary split part 114 is divided into a plurality of independent secondary split parts 1141 and then assembled, since the load carried by the first primary split part 114 is relatively small, the overall structure of the hub will not be affected.

The hub provided in this embodiment can manufacture and transport the second primary split part 115 and a plurality of secondary split parts 1141 separately. After transporting to the installation site, the second primary split part 115 and a plurality of secondary split parts 1141 are assembled into an integral hub. Such setting facilitates the manufacture and transportation of the hub, and the second primary split part 115 retains the main shaft mounting end 15 completely, so the main shaft mounting end 15 will not be deformed or damaged due to excessive load.

In a further embodiment, the first primary split part 114 and the second primary split part 115 are detachably connected by a connecting plate. Specifically, a first connecting hole may be provided at a position adjacent to the first primary split part 114 and the second primary split part 115, the first connecting holes arranged at the position adjacent to the first primary split part 114 and the second primary split part 115 can be multiple and distributed in an array. The connecting plate is provided with a second connecting hole corresponding to the first connecting hole one to one, and the connecting plate can be connected to the first primary split part 114 and the second primary split part 115 simultaneously through connecting members such as bolts and pins inserted in the first connecting hole and the second connecting hole, thus, the connecting plate connects the first primary split part 114 and the second primary split part 115 together.

It should be noted that, in this connection mode, the connecting plate is closely attached to the outer surface of the hub, and the size of the connecting plate extending outward is relatively small. Compared with the flange extending outward on the butting surface of each split part of the hub in the prior art, the flange occupies more radial space and the flange easily interferes with external devices. The hub provided in this embodiment occupies less space and does not interfere with external devices.

In a further embodiment, according to different installation positions, the connecting plate may include a first connecting plate 26 and a second connecting plate 27, wherein the first connecting plate 26 is connected to the web plates 14 of the first primary split part 114 and the second primary split part 115. The second connecting plate 27 is connected to the boundary area between any two adjacent blade mounting parts 13. It should be noted that the fourth dividing plane 124 divides the web plate 14 of the blade mounting part 13 and the area between the two blade mounting parts 13 into two parts, the first connecting plate 26 is configured to connect the web plates 14 of the first primary split part 114 and the second primary split part 115 together, and the second connecting plate 27 is configured to connect the boundary area between the blade mounting parts 13 of the first primary split part 114 and the second primary split part 115. When there are three blade mounting parts 13, the first primary split part 114 and the second primary split part 115 can be connected reliably by three first connecting plates 26 and three second connecting plates 27.

The fourth dividing plane 124 divides the hub into the first primary split part 114 and the second primary split part 115 along the transverse direction (the direction perpendicular to the hub axial direction), while the fifth dividing plane 125 divides the first primary split part 114 into a plurality of secondary split parts 1141 along the longitudinal direction (where the hub axis line is located), specifically, the first primary split part 114 can be divided into two symmetrical secondary split parts 1141 by a fifth dividing plane 125, the first primary split part 114 can also be divided into three identical secondary split parts 1141 through three fifth dividing planes 125.

In order to reliably connect a plurality of secondary split parts 1141 together, each secondary split part 1141 is detachably connected by an annular connecting member 28. The annular connecting member 28 is arranged concentrically with the opening of the windward end 16 of the hub, and each secondary split part 1141 is provided with a third connecting hole at one end of the windward end 16, the number of the third connecting holes is multiple, and the third connecting holes are evenly distributed along the circumferential direction of the windward end 16, the annular connecting member 28 is provided with a fourth connecting hole corresponding to the third connecting hole one to one, and a connecting member is detachably inserted into the corresponding third connecting hole and the fourth connecting hole. Specifically, the connecting member can be a bolt, a pin, etc., the annular connecting member 28 can reliably connect the plurality of secondary split parts 1141 together, and the a plurality of secondary split parts 111 are all connected to the second primary split part 115 through the first connecting plate 26 and the second connecting plate 27, so that the hub has a higher integrity and the overall strength of the hub is ensured.

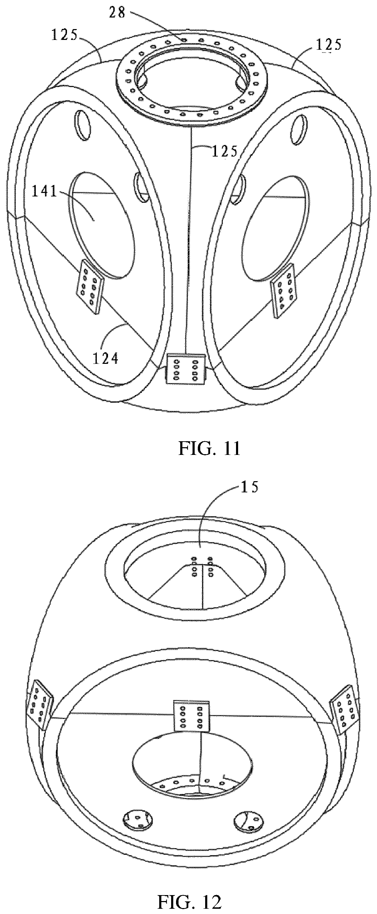

In a further technical solution, the above-mentioned fifth dividing plane 125 penetrates the boundary area of two adjacent blade mounting parts 13, that is, the fifth dividing plane 125 divide the boundary area of the blade mounting part 13 along the longitudinal direction (consistent with the hub axial direction) into two parts, as shown in FIGS. 9 and 10. Specifically, there may be one fifth dividing plane 125, the fifth dividing plane 125 divide the first primary split part 114 into two identical parts. The fifth dividing plane 125 also can be three, as shown in Figure 11 and Figure 12, three fifth dividing planes 125 divide the first primary split part 114 into three same parts, and each fifth dividing plane 125 is located at the boundary area between two adjacent blade mounting parts 13. When the second connecting plate 27 is used to connect the first primary split part 114 and the second primary split part 115, the same second connecting plate 27 can connect two adjacent secondary split parts 1141 of the first primary split parts 114 simultaneously, that is, the same second connecting plate 27 can be connected to the second primary split part 115 and two adjacent secondary split parts 1141 at the same time.

In the technical solution provided by this embodiment, the web plate 14 is provided with a weight-reducing hole 142, and the weight-reducing hole 142 provided on the web plate 14 can further reduce the weight of the hub.

The following content will give an overall description of the hub of the wind power generator in combination with the embodiments shown in FIGS. 9-12.

The hub of the wind power generator provided in this embodiment includes a hub main body 11, and the hub main body 11 has a main shaft mounting end 15, a windward end 16 and a blade mounting part 13.

Wherein the hub main body 11 has a hollow structure, the main shaft mounting end 15 is provided with a main shaft mounting hole for matching with the main shaft, the main shaft is mounted in the main shaft mounting hole, and the axis line of the hub is consistent with the axis line of the main shaft. The windward end 16 of the hub is opposite to the main shaft mounting end 15, that is, the windward end 16 and the main shaft mounting end 15 are located at opposite ends of the hub respectively.

The blade mounting part 13 is configured to install the blade. In this embodiment, there are three blade mounting parts 13, and they are evenly distributed along the circumferential direction with the axis line of the hub as the center. The blade mounting part 13 is provided with an annular flange the pitch bearing of the blade is mounted on the annular flange of the hub. The inside of the annular flange is provided with a web plate 14, which can play a role in strengthening the overall structural strength of the hub, and each web plate 14 is provided with a manhole 141 for the operator to pass through, and the manhole 141 can be disposed at the central position of the web plate 14, in order to reduce the weight of the hub, the web plate 14 is also provided with a weight reduction hole 142.

The hub is provided with a fourth dividing plane 124, the fourth dividing plane 124 is perpendicular to the axis line of the hub, and is located between each manhole 141 and the main shaft mounting end 15, the fourth dividing plane 124 divides the hub into mutually independent first primary split part 114 and second primary split part 115, the first primary split part 114 and the second primary split part 115 are detachably connected, and the manhole 141 and the windward end 16 are located on the first primary split part 114, the main shaft mounting end 15 is located on the second primary split part 115.

As shown in FIG. 11, the first primary split part 114 may be provided with three fifth dividing planes 125, and the three fifth dividing planes 125 divide the first primary split part 114 along the axial direction of the hub into three independent secondary split parts 1141, and any adjacent two secondary split parts 1141 are detachably connected.

A plurality of first connecting holes are arranged adjacent to the first primary split part 114 and the second primary split part 115, and there are a plurality of first connecting holes distributed in an array. The connecting plate is provided with a second connecting hole corresponding to the first connecting hole one to one, and the connecting plate is connected to the first primary split part 114 and the second primary split part 115 at the same time through connecting members such as bolts and pins inserted in the first connecting hole and the second connecting hole, thus the connecting plate connects the first primary split part 114 and the second primary split part 115 together.

According to different installation positions, the connecting plate includes a first connecting plate 26 and a second connecting plate 27, wherein the second connecting plate 27 is connected to the web plates 14 of the first primary split part 114 and the second primary split part 115. The second connecting plate 27 is connected to the junction between two adjacent blade mounting parts 13.

The above-mentioned fifth dividing plane 125 penetrates through the boundary area between two adjacent blade mounting parts 13, and there may be three fifth dividing planes 125, the three fifth dividing planes 125 divide the first primary split part 114 into three same parts, and each fifth dividing plane 125 is located at the boundary area of two adjacent blade mounting parts 13. When the second connecting plate 27 is used to connect the first primary split part 114 and the second primary split part 115, the same second connecting plate 27 is connected to two adjacent secondary split parts 1141 of the first primary split parts 114 simultaneously, that is, the same second connecting plate 27 can be connected to the second primary split part 115 and two adjacent secondary split parts 1141 at the same time.

In this way, this embodiment provide a hub, the second primary split part 115 and a plurality of secondary split parts 1141 are separately manufactured and transported. After transporting to the installation site, the second primary split part 115 and a plurality of secondary split parts 1141 are assembled into an integral hub. This is convenient for the manufacture and transportation of the hub, and the main shaft mounting end 15 is completely retained on the second primary split part 115, so that the main shaft mounting end 15 has high strength and will not be deformed or damaged due to excessive load.

An embodiment of the present application also provides a wind power generator, including the above-mentioned hub of the wind power generator. With such an arrangement, the wind power generator provided by this embodiment can reduce the difficulty of manufacturing and assembling the hub, and facilitate manufacturing and transportation. The derivation process of this beneficial effect is generally similar to the derivation process of the beneficial effect brought by the hub of the above-mentioned wind power generator, and will not be repeated here.

Finally, it should be noted that: the above embodiments are only used to illustrate the technical solutions of the present application, rather than limiting them; although the present application has been described in detail with reference to the foregoing embodiments, those of ordinary skill in the art should understand that: it can still Modifications are made to the technical solutions described in the foregoing embodiments, or equivalent replacements are made to some of the technical features; and these modifications or replacements do not make the essence of the corresponding technical solutions deviate from the spirit and scope of the technical solutions of the various embodiments of the present application.

## Claims

1. A hub of a wind power generator, comprising: a hub main body (11), wherein the hub main body (11) comprises a main shaft mounting end (15), a windward end (16) opposite to the main shaft mounting end (15), and a plurality of blade mounting parts (13) distributed along a circumferential direction of the hub main body (11), wherein
the hub main body (11) is formed by joining at least two split parts.

2. The hub of a wind power generator according to claim 1, wherein the hub main body (11) is divided into a first split part (111) and a second split part (112) by a dividing plane (12), the dividing plane (12) coincides with an axis line of the hub main body (11), and the dividing plane (12) penetrates through a boundary area of two adjacent blade mounting parts (13) and an area opposite to the boundary area;
the main shaft mounting end (15) of the first split part (111) and the main shaft mounting end (15) of the second split part (112) are connected through a first end connecting member (21), the windward ends (16) are connected through a second end connecting member (22), and the boundary areas of the blade mounting parts (13) of the first split part (111) and the second split part (112) are connected through a first plate-shaped member (23), and the areas opposite to the boundary areas are connected through a second plate-shaped member (24).

3. The hub of a wind power generator according to claim 2, wherein each of the boundary areas of the blade mounting parts (13) is provided with at least two first plate-shaped members (23);
or, each of the first plate-shaped members (23) is an arc-shaped structure, and matches with the boundary area of the blade mounting parts (13).

4. The hub of a wind power generator according to claim 2 or 3, wherein a web plate (14) is provided in the area of the blade mounting part (13), the dividing plane (12) penetrates through the web plate (14) opposite to the boundary area, the first split part (111) and the second split part (112) are respectively provided with a plurality of seventh connecting holes on the web plate (14), the second plate-shaped member (24) is provided with an eighth connecting hole corresponding to the seventh connecting hole, and the second plate-shaped member (24) connects the web plates (14) of the first split part (111) and the second split part (112) together by a connecting member inserted into the seventh connecting hole and the eighth connecting hole.

5. The hub of wind power generator according to claim 1, wherein the hub main body (11) is provided with a first dividing plane (121), a second dividing plane (122) and a third dividing plane (123), the first dividing plane (121), the second dividing plane (122) and the third dividing plane (123) are distributed along the circumferential direction of the hub main body (11), and penetrate through the main shaft mounting end (15) of the hub main body (11) to the windward end (16), so that the first dividing plane (121), the second dividing plane (122) and the third dividing plane (123) divide the hub main body (11) into a first split part (111), a second split part (112) and a third split part (113) arranged in the circumferential direction;
the main shaft mounting ends (15) of the first split part (111), the second split part (112) and the third split part (113) are connected through a first end connecting member (21), the windward ends (16) are connected through a second end connecting member (22), and outer peripheral surfaces of at least two of the first split part (111), the second split part (112) and the third split part (113) are connected through a plate-shaped member (24).

6. The hub of a wind power generator according to claim 5, wherein a web plate (14) is provided in the area of the blade mounting parts (13), the first dividing plane (121), the second dividing planes (122) and the third dividing plane (123) penetrate through the web plates (14) of three blade mounting parts (13), and the plate-shaped members (24) are connected to the web plates (14) of the first split part (111), the second split part (112) and the third split part (113).

7. The hub of a wind power generator according to any one of claims 2-6, wherein the first end connecting member (21) is formed by sequentially joining at least two arc-shaped connecting members; or, the first end connecting member (21) is a complete closed-loop structure.

8. The hub of a wind power generator according to claim 1, wherein a cavity structure is provided inside the hub main body (11), butting surfaces of adjacent split parts are provided with corresponding butt flanges (17), and the butt flanges (17) are arranged in the cavity structure, and the adjacent split parts are connected through the butt flanges (17).

9. The hub of a wind power generator according to claim 8, wherein the butt flange (17) comprises a central part (171) and a plurality of radially extending parts (172), a first end of each of the radially extending parts (172) is connected to the central part (171), each of the radially extending parts (172) extends radially outward from the central part (171), and a second end of each of the radially extending parts (172) is connected to the inner side wall of the split part.

10. The hub of a wind power generator according to claim 8 or 9, wherein the at least two split parts comprise a first split part (111) and a second split part (112), the butting surface between the first split part (111) and the second split part (112) is perpendicular to an axial direction of the hub main body (11);
or,
the number of the split parts is three or more, and the butt flange (17) is configured as a bent structure, so that each of the butt flanges (17) is connected with at least two other butt flanges (17).

11. The hub of a wind power generator according to claim 9, wherein the central part (171) is provided with a through-hole structure (173) for a worker to pass through;
a blade mounting position of the hub main body (11) is provided with a web plate (14), and the web plate (14) is provided with a manhole (141) for workers to pass through;
an avoidance notch (17) is provided at a position, corresponding to the manhole (141), of the butt flange (17).

12. The hub of a wind power generator according to claim 1, wherein the hub main body (11) is provided with a fourth dividing plane (124), the fourth dividing plane (124) is perpendicular to the axis line of the hub main body (11), and the fourth dividing plane (124) divides the hub main body (11) into a first primary split part (114) and a second primary split part (115) which are independent of each other, the first primary split part (114) and the second primary split part (115) are detachably connected, the windward end (16) is located on the first primary split part (114), and the main shaft mounting end (15) is located on the second primary split part (115);
the first primary split part (114) is provided with at least one fifth dividing plane (125), and the fifth dividing plane (125) divides the first primary split part (114) into at least two mutually independent secondary split parts (1141) along an axial direction of the hub, and any two adjacent secondary split parts (1141) are detachably connected.

13. The hub of a wind power generator according to claim 12, wherein each of the secondary split parts (1141) is detachably connected by a annular connecting member (28), one end, located at the windward end (16), of each of the secondary split parts (1141) is provided with a third connecting hole, the annular connecting member (28) is provided with a fourth connecting hole that is in a one-to-one correspondence with the third connecting hole, and a connecting member is detachably inserted into the corresponding third connecting hole and the fourth connecting hole.

14. The hub of a wind power generator according to claim 12 or 13, wherein the fifth dividing plane (125) penetrates through a boundary area between two adjacent blade mounting parts (13).

15. A wind power generator, comprising the hub of a wind power generator according to any one of claims 1-14.
